# EUROPEAN PATENT APPLICATION

(11) **EP 4 628 900 A1**
(43) Date of publication of application: **08.10.2025**
(21) Application number: 23897655.9
(22) Date of filing: 22.11.2023
(51) Int. Cl.: G01N 35/04, G01N 37/00

(54) **CONVEYANCE MECHANISM AND ANALYSIS DEVICE**

(30) Priority: 30.11.2022 JP 2022192254
(71) Applicant: FUJIFILM Corporation, Tokyo 106-8620 (JP)
(72) Inventor: MORI, Takaaki, Ashigarakami-gun, Kanagawa 258-8538 (JP); DENAWA, Tatsuyuki, Ashigarakami-gun, Kanagawa 258-8538 (JP)
(74) Representative: Dehns Germany Partnerschaft mbB
(86) International application number: PCT/JP2023/042080
(87) International publication number: WO 2024/117007

(57) **Abstract**

A transport mechanism includes: a transport table having a transport surface on which an analysis chip is placed with a bottom surface in contact with the transport surface, the analysis chip being transported while sliding on the transport surface; and a pair of screw shafts disposed parallel to each other along a transport direction and propelling the analysis chip in the transport direction by rotating about their axes while a helical protrusions are engaged with engagement ribs of the analysis chip, in which the transport surface has a hole formed in a contact region where the bottom surface contacts the transport surface, and a recessed portion formed in at least a part of a periphery of an opening edge of the hole, and the recessed portion has a recessed surface that makes a height of a partial opening edge, which is located on a downstream side in the transport direction on an entire circumference of the opening edge and includes a contact point with a tangent extending in a direction orthogonal to the transport direction, lower than a height of the transport surface, and the recessed surface extends from the partial opening edge to an outside of the contact region.

## Description

### BACKGROUND OF THE INVENTION

### 1. Field of the Invention

The present disclosure relates to a transport mechanism and an analysis apparatus.

### 2. Description of the Related Art

A micro-total analysis system (µTAS) is known as an analysis apparatus that analyzes a specimen such as a biological sample. The µTAS is an analysis apparatus that uses an analysis chip comprising a micro flow channel to perform a series of chemical or biochemical analysis steps within the analysis chip, such as mixing of a specimen and a reagent, a chemical reaction or a biochemical reaction, and detection of a product after the reaction. The analysis chip is loaded into the analysis apparatus, and various processes are executed within the analysis apparatus, such as a specimen dispensing process of dispensing a specimen, a reagent dispensing process of dispensing a reagent, a process for causing a specimen and a reagent to react with each other, and an optical detection process. The analysis chip is transported to each processing unit that executes various processes by a transport mechanism provided in the analysis apparatus.

As a transport mechanism that transports an object to be transported, a configuration is generally known in which the object to be transported is placed on a transport belt, the transport belt is rotated, and the object to be transported is transported for each transport belt, as in a belt conveyor. With the belt conveyor, the object to be transported is stationarily placed on the transport belt and does not move relative to the transport belt, so that the object to be transported can be stably transported. On the other hand, since the belt conveyor needs to be rotated, a structure such as a space for rotating the transport belt and a mechanism for driving the transport belt is required on a back surface of a transport passage, and space saving is difficult.

As a space-saving transport device, a transport device that comprises a screw shaft that includes a shaft body disposed along a transport direction and a ridge helically disposed on an outer periphery of the shaft body, and that transports an object to be transported by rotating the screw shaft is disclosed in JP2013-184801A.

For example, the transport device of JP2013-184801A holds a holder between a pair of screw shafts disposed in parallel, and sends the holder along a transport path to transport a specimen container held by the holder.

### SUMMARY OF THE INVENTION

The transport device of JP2013-184801A transports a holder that holds a specimen container accommodating a specimen in an upright state, and the specimen container is assumed to be a blood collection tube.

On the other hand, the analysis chip for µTAS is, for example, a microchannel device comprising a microchannel composed of a resin plate having a groove formed on one surface and a resin film to cover the groove, and has a shape significantly different from that of a test container such as the blood collection tube assumed in JP2013-184801A. Therefore, it is difficult to directly apply the transport device of JP2013-184801A to transporting an analysis chip having a flat bottom surface, such as the analysis chip for µTAS.

The present inventors are considering a transport mechanism that comprises a pair of screw shafts and that is configured to transport an analysis chip having a flat bottom surface by sliding it on a transport table. In such a transport mechanism, in a case of transporting an analysis chip having a flat bottom surface along the transport table, it has become apparent that in a case in which there are holes for screw insertion to install the transport table on a body of the apparatus present on a surface of the transport table, the analysis chip may get caught in the holes and become damaged.

An object of the present disclosure is to provide a transport mechanism and an analysis apparatus capable of stably transporting an analysis chip having a flat bottom surface and suppressing damage to the analysis chip.

According to the present disclosure, there is provided a transport mechanism that transports an analysis chip including a body part having a flat bottom surface and a pair of engagement ribs provided to protrude outward from both ends in a width direction of the body part in a transport direction orthogonal to the width direction, the transport mechanism comprising: a transport table having a transport surface on which the analysis chip is placed with the bottom surface in contact with the transport surface, the analysis chip being transported while sliding on the transport surface; and a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusions are engaged with the engagement ribs, in which the transport surface has a hole formed in a contact region where the bottom surface of the analysis chip contacts the transport surface, and a recessed portion formed in at least a part of a periphery of an opening edge of the hole, and the recessed portion has a recessed surface that makes a height of a partial opening edge, which is located on a downstream side in the transport direction on an entire circumference of the opening edge and includes a contact point with a tangent extending in a direction orthogonal to the transport direction, lower than a height of the transport surface, and the recessed surface extends from the partial opening edge to an outside of the contact region.

It is preferable that a ratio of a diameter of the hole to a length in the width direction of the body part is 8% or more, and the diameter is less than a length in the width direction of the body part.

It is preferable that a diameter of the hole is 4 mm or more.

It is preferable that the analysis chip has a planar shape in which a front end portion located on the downstream side in the transport direction has a front edge formed by a straight line extending in the direction orthogonal to the transport direction.

It is preferable that a partial outer edge located on the downstream side in the transport direction on an entire circumference of an outer edge of the recessed portion and extending to the outside of the contact region extends toward the outside of the contact region in an inclined manner toward the downstream side in the transport direction with respect to the tangent, and the partial outer edge is a straight line or has an arc shape convex toward the outside of the contact region.

It is preferable that an overall planar shape of the recessed portion including the hole is an oval shape of which a minor diameter is a diameter of the hole and one side in a longitudinal direction is the partial outer edge, and an entirety of a semicircular portion on an opposite side of the hole in the oval shape is located outside the contact region.

It is preferable that a plurality of the holes are provided, and the recessed portion is provided for each of the holes.

It is preferable that the analysis chip is a microchannel device including a microchannel for analyzing a specimen consisting of a biological sample.

According to the present disclosure, there is provided an analysis apparatus comprising: the transport mechanism according to the present disclosure; and a plurality of processing units disposed along the transport direction of the transport table and performing predetermined processing on a specimen accommodated in the analysis chip.

With the transport mechanism and the analysis apparatus of the technology of the present disclosure, it is possible to stably transport the analysis chip having a flat bottom surface and suppress damage to the analysis chip.

### BRIEF DESCRIPTION OF THE DRAWINGS

Fig. 1 is a schematic view showing a schematic configuration of an analysis apparatus.
Fig. 2 is a perspective view of an analysis chip with a bottom surface facing up.
Fig. 3 is an exploded perspective view of the analysis chip.
Fig. 4 is a perspective view of the analysis chip shown in Fig. 2 with its top and bottom reversed.
Fig. 5 is a perspective view showing a schematic configuration of a transport mechanism.
Fig. 6 is an enlarged plan view showing a part of a transport table on which the analysis chip is placed.
Fig. 7 is an enlarged perspective view showing a part of a transport table on which the analysis chip is placed.
Fig. 8 is an explanatory diagram of a modification example of a recessed portion.
Fig. 9 is an enlarged plan view showing a part of the transport mechanism.
Fig. 10 is an explanatory diagram of a problem that occurs in a case in which the transport table comprises a hole that does not comprise a recessed portion.

### DESCRIPTION OF THE PREFERRED EMBODIMENTS

Hereinafter, a transport mechanism and an analysis apparatus comprising the transport mechanism according to one embodiment of the present disclosure will be described with reference to the drawings.

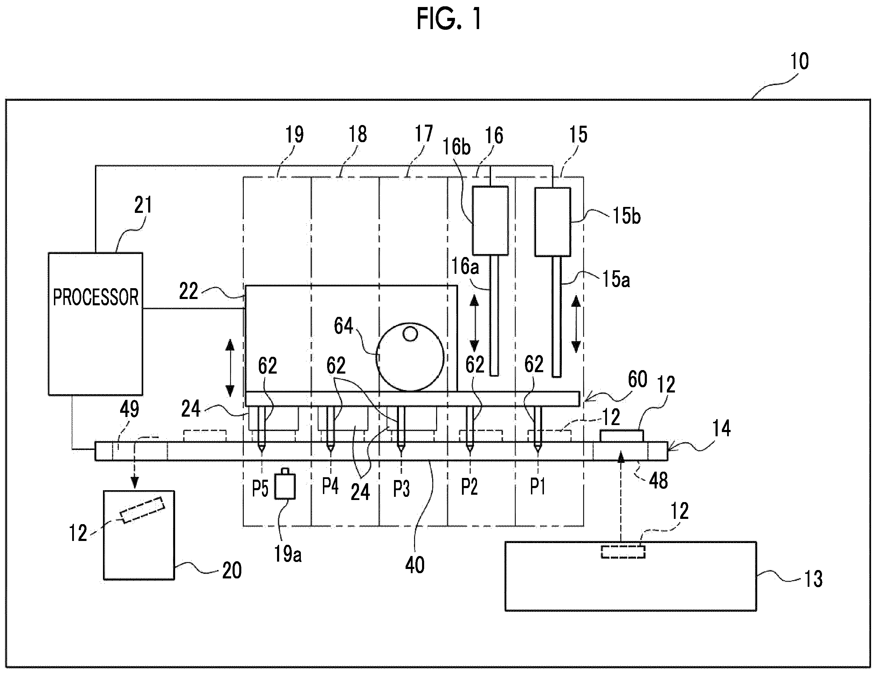

Fig. 1 is a schematic view showing a schematic configuration of an analysis apparatus comprising a transport mechanism. An analysis apparatus 10 is, for example, an immunological analysis apparatus that detects a test target substance in a specimen collected from a living body by utilizing an antigen-antibody reaction. The analysis apparatus 10 dispenses a specimen and a reagent to an analysis chip 12, causes mixing and an immune reaction in a microchannel in the analysis chip 12, optically detects the test target substance in the specimen, and outputs a test result.

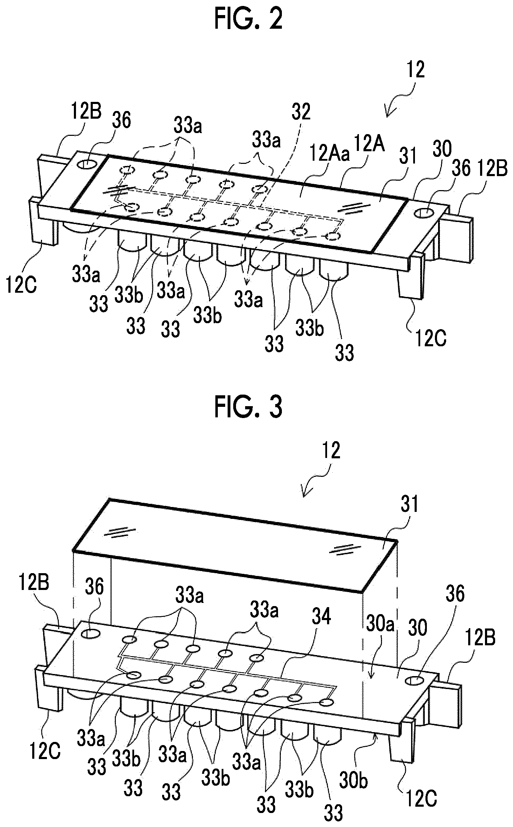

The analysis chip 12 is a microchannel device comprising a microchannel 32 therein (see Fig. 2), and is, for example, an analysis chip for µTAS. As an example, a reagent such as a labeled antibody solution and a buffer solution is introduced into the microchannel 32 in addition to the specimen. In the microchannel 32, an immune complex containing the test target substance in the specimen is generated and bound/free (B/F) separated by isotachophoresis, and separation and fractionation are performed by capillary electrophoresis. Then, the immune complex is irradiated with excitation light, and the fluorescence intensity corresponding to the concentration of the test target substance in the specimen is measured. The specimen is, for example, a biological sample such as blood collected from a living body. First, details of the analysis chip 12 will be described.

### [Analysis chip]

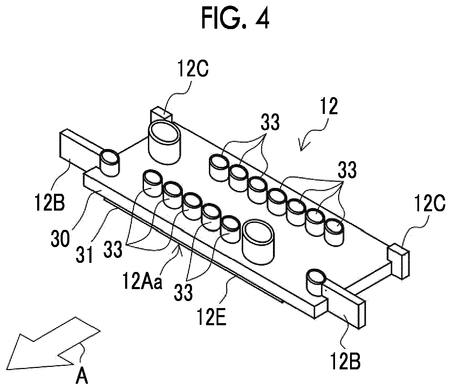

Fig. 2 is a perspective view of the analysis chip 12 with a bottom surface 12Aa facing up. Fig. 3 is an exploded perspective view of the analysis chip 12. Fig. 4 is a perspective view of the analysis chip 12 shown in Fig. 2 with its top and bottom reversed.

As shown in Fig. 2, the analysis chip 12 comprises a body part 12A and a pair of engagement ribs 12B. In the body part 12A, one surface 12Aa is flat. For convenience of description, in Fig. 2, the analysis chip 12 is shown with the bottom surface 12Aa facing up. In a case in which the analysis chip 12 is transported by the transport mechanism 14, the analysis chip 12 is transported with the one surface 12Aa serving as the bottom surface (see Fig. 4). Accordingly, this one surface 12Aa is referred to as the bottom surface 12Aa of the body part 12A of the analysis chip 12. That is, the analysis chip 12 comprises the body part 12A of which the bottom surface 12Aa is flat. The pair of engagement ribs 12B are provided to protrude outward from both ends in a width direction of the body part 12A. Here, the width direction of the body part 12A is a direction orthogonal to a transport direction A of the analysis chip 12. In addition, the analysis chip 12 comprises a pair of support ribs 12C that serve as a support portion in a case in which the analysis chip 12 is placed in a posture shown in Fig. 2. The support ribs 12C are provided to protrude outward from both ends in the width direction of the body part 12A, as with the engagement rib 12B, but a protruding width is smaller than that of the engagement rib 12B. The analysis chip 12 comprises the microchannel 32 and a plurality of wells 33 for dispensing a specimen, a reagent, and the like in the microchannel 32.

As shown in Fig. 3, the analysis chip 12 is composed of a resin plate 30 and a film 31.

The resin plate 30 is provided with a groove 34 constituting the microchannel 32 (see Fig. 2) and the plurality of wells 33. The microchannel 32 is, for example, a flow channel having a width of several tens of µm, and the groove 34 is a groove having a width of several tens of µm. The well 33 consists of a through-hole 33a that penetrates from one surface 30a of the resin plate 30 to the other surface 30b which is a back surface thereof, and a cylindrical portion 33b where an opening peripheral edge of the through-hole 33a protrudes from a surface on the other surface 30b side.

The film 31 is bonded to the one surface 30a of the resin plate 30 on which the groove 34 and the well 33 are formed so as to cover the groove 34 and the through-hole 33a (see Figs. 2 and 3). As a result, a portion of the groove 34 and the through-hole 33a that is open on the one surface 30a is sealed. The one surface 30a of the resin plate 30 to which the film 31 is bonded corresponds to the bottom surface 12Aa of the analysis chip 12 (see Fig. 2).

The pair of engagement ribs 12B and support ribs 12C described above are formed on the resin plate 30. In addition, the resin plate 30 comprises a through-hole 36 that is separate from the through-hole 33a of the well 33 and that penetrates the resin plate 30 in an up-down direction in an end part region of the body part 12A adjacent to the engagement rib 12B. The through-hole 36 is a hole through which a positioning pin 62 of the transport mechanism 14, which will be described below, is inserted. In this example, the through-holes 36 are provided at two positions. The through-hole 36 is provided at a position adjacent to the engagement rib 12B in the end part region in the width direction of the body part 12A.

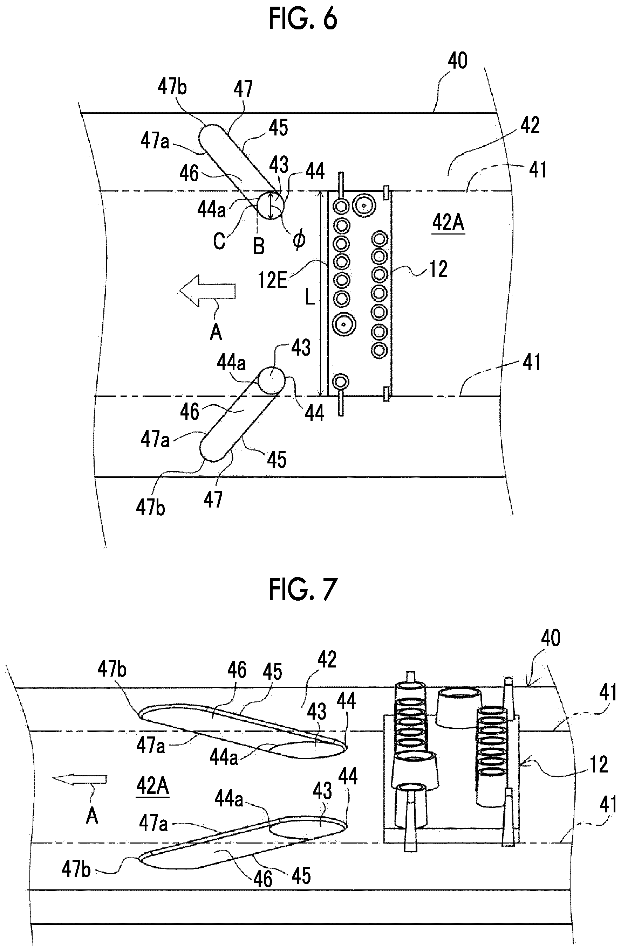

As shown in Fig. 4, the analysis chip 12 is transported in the transport direction A orthogonal to the width direction with the film 31 side as a bottom surface. In addition, the analysis chip 12 is transported in a position in which the engagement rib 12B is at a front end located on a downstream side in the transport direction A, and the support rib 12C is at a rear end located on an upstream side in the transport direction A. The analysis chip 12 has a planar shape in which a front end portion 12E located on the downstream side in the transport direction A has a front edge a formed by a straight line extending along the direction orthogonal to the transport direction A (see Fig. 6).

Returning to Fig. 1, a configuration of the analysis apparatus 10 will be described. The analysis apparatus 10 comprises, for example, a stocker 13 that accommodates a plurality of the analysis chips 12, the transport mechanism 14 that transports the analysis chip 12, a plurality of processing units 15 to 19 that perform predetermined processing on a specimen accommodated in the analysis chip 12, a chip disposal unit 20, and a processor 21 that functions as a control unit.

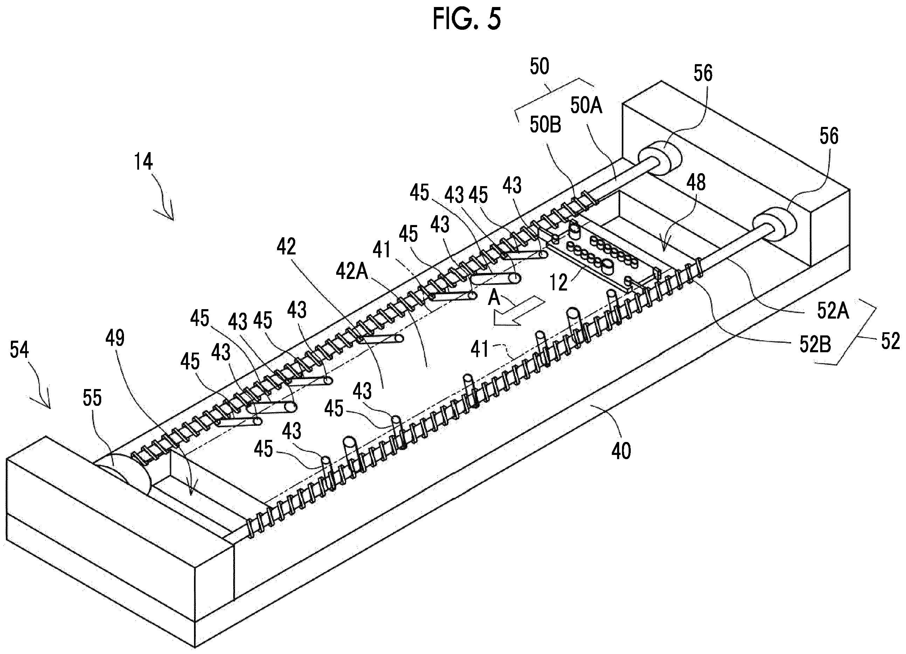

The transport mechanism 14 comprises a transport table 40 extending along the transport direction A of the analysis chip 12 and a pair of screw shafts 50 and 52 (see Fig. 5). Although details of the transport mechanism 14 will be described below, the transport table 40 has a plurality of stop positions P1 to P5 where the analysis chip 12 is stopped. In addition, in this example, the transport mechanism 14 comprises a positioning mechanism 60 that positions the analysis chip 12, which is stopped at the stop positions P1 to P5, at preset positions in the stop positions P1 to P5. The positioning mechanism 60 comprises a positioning pin 62 that positions the analysis chip 12 by inserting its tip into a positioning hole provided at each of the stop positions P1 to P5 of the transport table 40, and a lifting mechanism 64 that lifts and lowers the positioning pin 62. The lifting mechanism 64 lifts the positioning pin 62 between an insertion position where the positioning pin 62 is inserted through the through-hole 36 of the analysis chip 12 and the tip is inserted into the positioning hole and a retreat position where the positioning pin 62 is moved upward from the insertion position and is retreated from the insertion position. The lifting mechanism 64 is, for example, an eccentric cam.

The plurality of analysis chips 12 are stored in the stocker 13 in advance. The analysis chip 12 is taken out from the stocker 13 by a chipset mechanism (not shown) and is set on the transport table 40. The stocker 13 is disposed below an upstream end of the transport table 40, and the analysis chip 12 passes through a chipset opening 48 provided at the upstream end of the transport table 40 and is set on a transport surface 42 (see Fig. 5).

The plurality of processing units 15 to 19 are, for example, a specimen dispensing processing unit 15, a reagent dispensing processing unit 16, a pressurization processing unit 17, a reaction processing unit 18, and a detection processing unit 19. The plurality of processing units 15 to 19 are disposed to correspond to the respective stop positions P1 to P5 along the transport direction A of the analysis chip 12.

The specimen dispensing processing unit 15 comprises a dispensing mechanism 15b comprising a nozzle 15a, and dispenses a specimen into the microchannel 32 of the analysis chip 12 stopped at the stop position P1. A specimen collection tube (not shown) accommodating the collected specimen is loaded into the analysis apparatus 10, and the nozzle 15a sucks the specimen from the specimen collection tube and dispenses the specimen into the microchannel 32 from the predetermined well 33 of the analysis chip 12.

The reagent dispensing processing unit 16 comprises a dispensing mechanism 16b comprising a nozzle 16a, and dispenses a reagent into the microchannel 32 of the analysis chip 12 stopped at the stop position P2. A reagent container (not shown) accommodating the reagent is loaded into the analysis apparatus 10, and the nozzle 16a sucks the reagent from the reagent container and dispenses the reagent into the microchannel 32 from the predetermined well 33 of the analysis chip 12.

In the pressurization processing unit 17, gas is fed through at least a part of the plurality of wells 33 from the outside of the analysis chip 12 to introduce the specimen and the reagent into the microchannel 32 and mix them, so that the inside of the microchannel 32 is pressurized.

In the reaction processing unit 18, a labeled antibody is concentrated, an antigen-antibody reaction is performed, and B/F separation is performed by isotachophoresis.

In the detection processing unit 19, the separation and fractionation of the immune complex are performed by capillary gel electrophoresis method, and then detection processing of detecting the test target substance in the specimen is executed. For example, the test target substance contained in the immune complex is detected by a laser fluorescence method. The detection processing unit 19 comprises an optical head 19a. The optical head 19a is disposed at a position where fluorescence from a predetermined location of the microchannel 32 can be received while irradiating the predetermined location with laser light from the bottom surface 12Aa of the analysis chip 12 in a state where the analysis chip 12 is stopped at the stop position P5. The optical head 19a comprises, for example, an irradiation section and a light receiving section.

The analysis apparatus 10 further comprises a pneumatic section (not shown) that pressurizes and depressurizes the inside of the flow channel and an electrophoresis section 22 for electrophoresis. During the pressurization processing, the reaction processing, and the detection processing, a pressing unit 24 comprising a sealing portion and a supply pipe presses a surface of the analysis chip 12, which comprises the well 33, in order to seal the well 33 or to connect a gas supply pipe to the well 33. The pressing unit 24 can be lifted and lowered by the lifting mechanism between a position where it is separated from the analysis chip 12 and a position where it presses the analysis chip 12. In this example, the lifting mechanism 64 provided in the positioning mechanism 60 of the transport mechanism 14 also serves as the lifting mechanism of the pressing unit 24.

The chip disposal unit 20 accommodates the analysis chip 12 after the analysis has been completed. The chip disposal unit 20 is disposed at a location where the analysis chip 12 that falls from a disposal opening 49 provided at a downstream end of the transport table 40 is received.

The processor 21 constitutes a control unit that integrally controls each unit of the analysis apparatus 10. An example of the processor 21 is a central processing unit (CPU) which performs various types of control by executing a program. The CPU functions as a control unit which controls each unit by executing a program. The processor 21 also serves as a control unit of the transport mechanism 14. The processor 21 functions as a control unit of the transport mechanism 14, and controls a driving unit 54 of the transport mechanism 14, which will be described below. As a result, the processor controls rotation of the screw shafts 50 and 52 to control movement of the analysis chip 12 between the plurality of stop positions P1 to P5 and stopping of the analysis chip 12 at the plurality of stop positions P1 to P5.

Hereinafter, the transport mechanism 14 will be described in detail.

### [Transport Mechanism]

Fig. 5 is a perspective view showing a schematic configuration of the transport mechanism 14. The transport mechanism 14 transports the above-described analysis chip 12 in the transport direction A orthogonal to the width direction of the analysis chip 12. The transport mechanism 14 comprises the transport table 40 and the pair of screw shafts 50 and 52.

Fig. 6 is an enlarged plan view showing a part of the transport table 40 on which the analysis chip 12 is placed, and Fig. 7 is an enlarged perspective view showing a part of the transport table 40 on which the analysis chip 12 is placed. In Figs. 6 and 7, the screw shafts 50 and 52 disposed on the transport table 40 are omitted.

The transport table 40 has the transport surface 42 on which the bottom surface 12Aa of the analysis chip 12 is placed with the bottom surface 12Aa in contact with the transport surface 42. The analysis chip 12 is transported by sliding on the transport surface 42 of the transport table 40 in a state where the bottom surface 12Aa of the analysis chip 12 is in contact with the transport surface 42. A temperature of the transport surface 42 may be controlled by temperature control means (not shown). The temperature control means comprises, for example, a heater and a temperature control circuit. In a case in which the analysis chip 12 is transported with the bottom surface 12Aa in contact with the temperature-controlled transport surface 42, the specimen and the reagent accommodated in the analysis chip 12 can be transported while being temperature-controlled. A region of the transport surface 42 with which the bottom surface 12Aa of the analysis chip 12 comes into contact in a case of transporting the analysis chip 12 is referred to as a contact region 42A. The contact region 42A is a region between the pair of screw shafts 50 and 52, and is a region that extends along the transport direction A with a width equivalent to a length L in the width direction of the body part 12A of the analysis chip 12. In Figs. 5 to 7 and the like, a region between two-dot chain lines 41 on the transport surface 42 corresponds to the contact region 42A.

The transport surface 42 has a hole 43 formed in the contact region 42A and a recessed portion 45 formed in at least a part of a periphery of an opening edge 44 of the hole 43. The hole 43 formed in the contact region 42A of the transport surface 42 is a positioning hole into which the tip of the positioning pin 62 is inserted, a hole for fixing screw insertion for fixing the transport table 40 in the analysis apparatus 10, or the like.

The recessed portion 45 has a recessed surface 46 that makes a height of a partial opening edge 44a, which is located on the downstream side in the transport direction A on the entire circumference of the opening edge 44 and includes a contact point C with a tangent B extending in the direction orthogonal to the transport direction A, lower than the transport surface 42, and the recessed surface 46 extends from the partial opening edge 44a to an outside of the contact region 42A.

The hole 43 comprising the recessed portion 45 is a round hole as an example. A ratio of a diameter φ of the hole 43 to a length L in the width direction of the body part 12A of the analysis chip 12 is, as an example, 8% or more, and the diameter φ is less than the length L. In a more specific example, the diameter φ of the hole 43 is 4 mm or more.

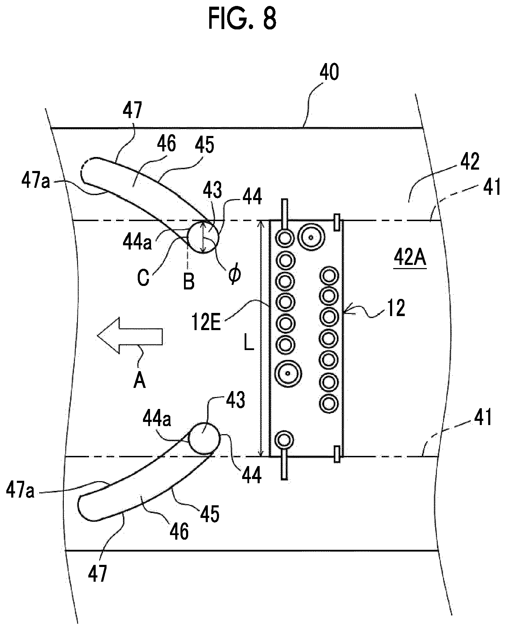

A partial outer edge 47a located on the downstream side in the transport direction A on an entire circumference of an outer edge 47 of the recessed portion 45 and extending to the outside of the contact region 42A extends toward the outside of the contact region 42A in an inclined manner toward the downstream side in the transport direction A with respect to the tangent B. The partial outer edge 47a is a straight line in this example. In addition, as shown in Fig. 8 as a modification example, the partial outer edge 47a may have an arc shape convex toward the outside of the contact region 42A.

In this example, an overall planar shape of the recessed portion 45 including the hole 43 is an oval shape of which a minor diameter is a diameter of the hole 43 and one side in a longitudinal direction is the partial outer edge 47a. In the oval shape, the entirety of a semicircular portion 47b on an opposite side of the hole 43 is located outside the contact region 42A.

As shown in Fig. 5, in this example, a plurality of the holes 43 are formed on the transport surface 42, and the recessed portion 45 is provided for each of the holes 43.

As shown in Fig. 5, the pair of screw shafts 50 and 52 are disposed on the transport table 40. The pair of screw shafts 50 and 52 are disposed parallel to each other along the transport direction A. The screw shaft 50 has a shaft body 50A and a helical protrusion 50B helically formed on an outer peripheral surface of the shaft body 50A. Similarly, the screw shaft 52 has a shaft body 52A and a helical protrusion 52B helically formed on an outer peripheral surface of the shaft body 52A.

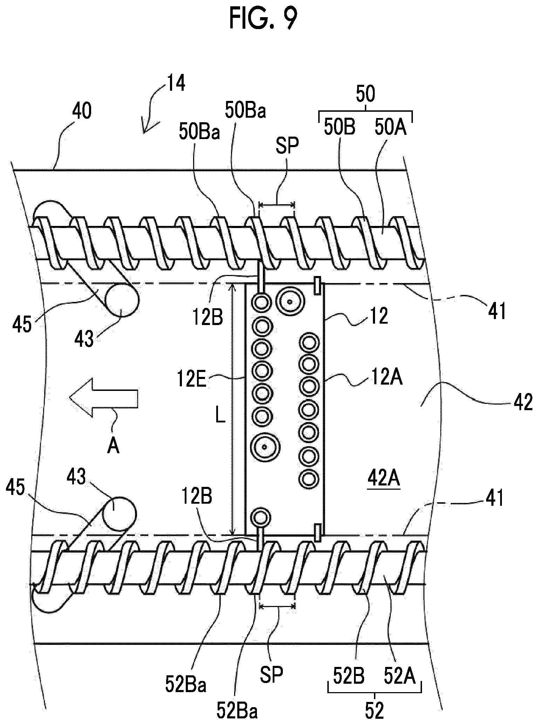

A helical pitch SP of the helical protrusion 50B of one screw shaft 50 and a helical pitch SP of the helical protrusion 52B of the other screw shaft 52 are the same (see Fig. 9). A direction of helical rotation of the helical protrusion 50B of one screw shaft 50 is opposite to a direction of helical rotation of the helical protrusion 52B of the other screw shaft 52. One end of each of the pair of screw shafts 50 and 52 is connected to the driving unit 54 that rotationally drives the screw shafts 50 and 52. The pair of screw shafts 50 and 52 are attached to the driving unit 54 such that phases of the helical protrusions 50B and 52B match each other. The driving unit 54 includes, for example, a motor 55 and a plurality of gears (not shown). One end of one screw shaft 50 is connected to the motor 55 such that a driving force of the motor 55 can be directly transmitted as a rotational force. One end of the other screw shaft 52 is connected to one of the plurality of gears, and the driving force of the motor 55 is transmitted as a rotational force via the plurality of gears. The plurality of gears are combined such that a rotation direction of one screw shaft 50 and a rotation direction of the other screw shaft 52 are opposite to each other. The other end of each of the screw shafts 50 and 52 is supported by a bearing unit 56.

The pair of screw shafts 50 and 52 rotate about their axes while the respective helical protrusions 50B and 52B and the pair of engagement ribs 12B are engaged with each other, thereby propelling the analysis chip 12 in the transport direction A.

Fig. 9 is an enlarged plan view showing a part of the transport mechanism 14. The analysis chip 12 is placed on the transport surface 42 of the transport table 40 in a posture in which the flat bottom surface 12Aa (see Fig. 2) is in contact with the transport surface 42 and the front end portion 12E extending in the width direction is orthogonal to the transport direction A. In addition, the analysis chip 12 is placed between the pair of screw shafts 50 and 52 disposed parallel to each other. The helical protrusion 50B is a series of convex portions helically formed along an axial direction, and a protrusion portion 50Ba is defined as one convex portion in a case in which the helical protrusion 50B is viewed in a plan view. A plurality of the protrusion portions 50Ba are arranged at equal pitches SP along the axial direction in a case in which the helical protrusion 50B is viewed in a plan view. Similarly, a protrusion portion 52Ba is defined as one convex portion in a case in which the helical protrusion 52B is viewed in a plan view. A plurality of the protrusion portions 52Ba are arranged at equal pitches SP along the axial direction in a case in which the helical protrusion 52B is viewed in a plan view. In the analysis chip 12, one engagement rib 12B is located in a recess portion between two protrusion portions 50Ba adjacent to each other in the axial direction in a case in which a helical groove of the screw shaft 50, more specifically, the helical protrusion 50B is viewed in a plan view. Further, the other engagement rib 12B is placed to be located in a recess portion between two protrusion portions 52Ba adjacent to each other in the axial direction in a case in which a helical groove of the screw shaft 52, more specifically, the helical protrusion 52B is viewed in a plan view. An interval of the recess portion between the two adjacent protrusion portions 50Ba is narrower than the pitch SP of the helical protrusion 50B by a width of one protrusion portion 50Ba, but is substantially equal to the pitch SP. An interval between the two adjacent protrusion portions 52Ba is also narrower than the pitch SP of the helical protrusion 52B by a width of one protrusion portion 52Ba, but is substantially equal to the pitch SP.

The engagement between the screw shafts 50 and 52 and the pair of engagement ribs 12B will be described in more detail below. The engagement between the screw shaft 50 and one engagement rib 12B will be described as an example. In a case in which the helical protrusion 50B rotates due to the rotation of the screw shaft 50, a phase of the protrusion portion 50Ba, which is a convex portion of the helical protrusion 50B, and a phase of the recess portion, which is a groove of the adjacent protrusion portion 50Ba, move in the transport direction. As a result, the protrusion portion 50Ba presses the engagement rib 12B from the rear (upstream side), and propels the engagement rib 12B in the axial direction of the screw shaft 50 in accordance with the change in phase of the protrusion portion 50Ba while maintaining a contact state with the engagement rib 12B. The same applies to the engagement between the screw shaft 52 and the other engagement rib 12B. In this way, the screw shafts 50 and 52 are rotated about their axes while the helical protrusions 50B and 52B and the engagement ribs 12B and 12B are engaged with each other, whereby the engagement ribs 12B and 12B are pressed in the axial direction by the helical protrusions 50B and 52B. As a result, the analysis chip 12 is transported in the transport direction A which is the axial direction. In this case, the analysis chip 12 is transported while sliding on the transport surface 42 in a state where the bottom surface 12Aa is in contact with the transport surface 42.

As described above, the present transport mechanism 14 comprises the transport table 40 having the transport surface 42 on which the analysis chip 12 is transported while sliding and the pair of screw shafts 50 and 52 that propel the analysis chip 12 in the transport direction A by rotating about their axes while the helical protrusions 50B and 52B and the engagement ribs 12B and 12B are engaged with each other. With the present transport mechanism 14, by rotating the pair of screw shafts 50 and 52, the analysis chip 12 is transported in such a manner that it slides on the transport surface 42 of the transport table 40, thereby enabling stable transport of the analysis chip 12. In addition, since the screw shafts 50 and 52 are rotated to transport the analysis chip, space saving can be achieved compared to a transport mechanism that requires a driving unit on a back surface side of a transport table as in a belt conveyor. In addition, compared to a belt conveyor, it is possible to improve the positional accuracy in a case of stopping the analysis chip 12 at a desired stop position.

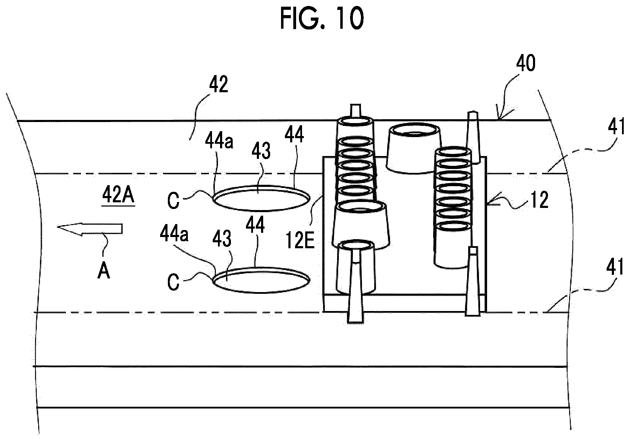

As described above, the hole 43 such as a positioning hole and a hole for fixing screw insertion is formed on the transport surface 42. In the present embodiment, the recessed portion 45 is formed in at least a part of the periphery of the opening edge 44 of the hole 43, but, in the absence of such a recessed portion 45, the following problem arises. Referring to Fig. 10, the problem will be described. In Fig. 10, the same components as those in the transport mechanism 14 of the present embodiment are denoted by the same reference numerals.

In Fig. 10, the transport table 40 does not have the recessed portion 45 in the hole 43 of the transport surface 42. In this case, in a case in which the flat bottom surface 12Aa is slid over the contact region 42A, the front end portion 12E located on the downstream side of the analysis chip 12 may get caught on the partial opening edge 44a, which is located on the downstream side in the transport direction A of the opening edge 44 of the hole 43. In particular, the front end portion 12E of the analysis chip 12 is likely to get caught on the contact point C with a tangent extending in the direction orthogonal to the transport direction A of the partial opening edge 44a. In particular, the analysis chip 12 in this example is configured such that, as shown in Fig. 5, the bottom surface 12Aa is formed by the film 31 bonded to the resin plate 30, so that an end part of the film 31 is likely to get caught on the partial opening edge 44a of the hole 43. In a case in which the film 31 gets caught on the partial opening edge 44a of the hole 43, the film 31 may peel off from the resin plate 30, leading to damage to the analysis chip 12.

On the other hand, in the present transport mechanism 14, the transport surface 42 has the recessed portion 45 formed in at least a part of the periphery of the opening edge 44 of the hole 43, and this recessed portion 45 has the recessed surface 46 that makes the height of the partial opening edge 44a, which includes the contact point C with the tangent B extending in the direction orthogonal to the transport direction A on the entire circumference of the opening edge 44, lower than the height of the transport surface 42. The recessed surface 46 extends from the partial opening edge 44a to the outside of the contact region 42A. Therefore, in the contact region 42A, there is no portion orthogonal to the transport direction A and flush with the transport surface 42 at the opening edge 44 of the hole 43 or the downstream edge of the recessed portion 45 provided on the transport surface 42. Thus, the analysis chip 12 can be prevented from getting caught in the hole 43 or the recessed portion 45 during the transport, and as a result, damage to the analysis chip 12 can be suppressed.

In a case in which the ratio of the diameter φ of the hole 43 to the length L in the width direction of the analysis chip 12 is 8% or more, the analysis chip 12 is likely to get caught during the transport. Therefore, in a case in which the ratio of the diameter of the hole 43 to the length L in the width direction of the analysis chip 12 is 8% or more, the effect of providing the recessed portion 45 described above is significant.

In the case of using µTAS, the length L in the width direction of the analysis chip 12 is often 40 mm to 50 mm, and, in a case of using the analysis chip 12 of this size, in a case in which the diameter φ of the hole 43 is 4 mm or more, the analysis chip 12 is likely to get caught during the transport. Therefore, in a case in which the diameter of the hole 43 is 4 mm or more, the effect of providing the recessed portion 45 described above is significant.

In a case in which there are a plurality of holes 43 in the contact region 42A of the transport surface 42, it is preferable that each hole 43 is provided with the recessed portion 45. By providing the recessed portion 45 in each hole 43, it is possible to prevent the analysis chip 12 from getting caught in each hole 43.

On the transport surface 42, there may be holes that do not have the recessed portion 45. In particular, in a case in which the ratio of the diameter of the hole to the length L in the width direction of the body part 12A of the analysis chip 12 is less than 8%, the analysis chip 12 is less likely to get caught, so that such a hole with that diameter does not need to be provided with the recessed portion 45. For example, in a case in which the transport table 40 is a transport table for transporting the analysis chip 12 with L being about 40 mm to 50 mm, a hole having a diameter less than 4 mm does not need to be provided with the recessed portion 45.

The analysis apparatus 10 comprises the transport mechanism 14, which can suppress damage to the analysis chip 12. Therefore, the occurrence of an error due to the damage to the analysis chip 12 during the analysis can be suppressed, and the analysis efficiency can be improved.

The transport mechanism 14 can be applied to an analysis apparatus other than the analysis apparatus 10 described above, and the analysis chip that can be transported by the transport mechanism 14 is not limited to the analysis chip 12. The analysis chip transported by the transport mechanism 14 may be any analysis chip as long as it comprises at least a body part having a flat bottom surface and a pair of engagement ribs provided to protrude outward from both ends in a width direction of the body part.

In addition, in the above-described embodiment, as a hardware structure of the processor, various processors shown below can be used. The various processors include, in addition to a CPU that is a general-purpose processor that executes software (program) to function as various processing units, a programmable logic device (PLD) of which a circuit configuration can be changed after manufacturing, such as a field-programmable gate array (FPGA), and a dedicated electric circuit that is a processor having a circuit configuration dedicatedly designed for executing specific processing, such as an application specific integrated circuit (ASIC).

The above-described processing may be executed by one of these various processors, or a combination of two or more processors of the same type or different types (for example, a combination of a plurality of FPGAs and a combination of a CPU and an FPGA). In addition, a plurality of processing units may be configured of one processor. As an example in which the plurality of processing units are configured of one processor, there is a form in which a processor that realizes all functions of a system including the plurality of processing units by using one integrated circuit (IC) chip is used, such as a system on chip (SOC).

Furthermore, the hardware structure of the processors is, more specifically, an electric circuit (circuitry) in which circuit elements such as semiconductor elements are combined.

The following appendices are further disclosed with respect to the above embodiment.

### (Appendix 1)

A transport mechanism that transports an analysis chip including a body part having a flat bottom surface and a pair of engagement ribs provided to protrude outward from both ends in a width direction of the body part in a transport direction orthogonal to the width direction, the transport mechanism comprising:
a transport table having a transport surface on which the analysis chip is placed with the bottom surface in contact with the transport surface, the analysis chip being transported while sliding on the transport surface; and
a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusions are engaged with the engagement ribs,
in which the transport surface has a hole formed in a contact region where the bottom surface of the analysis chip contacts the transport surface, and a recessed portion formed in at least a part of a periphery of an opening edge of the hole, and
the recessed portion has a recessed surface that makes a height of a partial opening edge, which is located on a downstream side in the transport direction on an entire circumference of the opening edge and includes a contact point with a tangent extending in a direction orthogonal to the transport direction, lower than a height of the transport surface, and the recessed surface extends from the partial opening edge to an outside of the contact region.

### (Appendix 2)

The transport mechanism according to Appendix 1,
in which a ratio of a diameter of the hole to a length in the width direction of the body part is 8% or more, and the diameter is less than a length in the width direction of the body part.

### (Appendix 3)

The transport mechanism according to Appendix 1 or 2,
in which a diameter of the hole is 4 mm or more.

### (Appendix 4)

The transport mechanism according to any one of Appendices 1 to 3,
in which the analysis chip has a planar shape in which a front end portion located on the downstream side in the transport direction has a front edge formed by a straight line extending in the direction orthogonal to the transport direction.

### (Appendix 5)

The transport mechanism according to any one of Appendices 1 to 4,
in which a partial outer edge located on the downstream side in the transport direction on an entire circumference of an outer edge of the recessed portion and extending to the outside of the contact region extends toward the outside of the contact region in an inclined manner toward the downstream side in the transport direction with respect to the tangent, and
the partial outer edge is a straight line or has an arc shape convex toward the outside of the contact region.

### (Appendix 6)

The transport mechanism according to Appendix 5,
in which an overall planar shape of the recessed portion including the hole is an oval shape of which a minor diameter is a diameter of the hole and one side in a longitudinal direction is the partial outer edge, and
an entirety of a semicircular portion on an opposite side of the hole in the oval shape is located outside the contact region.

### (Appendix 7)

The transport mechanism according to any one of Appendices 1 to 6,
in which a plurality of the holes are provided, and the recessed portion is provided for each of the holes.

### (Appendix 8)

The transport mechanism according to any one of Appendices 1 to 7,
in which the analysis chip is a microchannel device including a microchannel for analyzing a specimen consisting of a biological sample.

### (Appendix 9)

An analysis apparatus comprising:
the transport mechanism according to any one of Appendices 1 to 8; and
a plurality of processing units disposed along the transport direction of the transport table and performing predetermined processing on a specimen accommodated in the analysis chip.

The disclosure of Japanese Patent Application No. 2022-192254 filed on November 30, 2022 is incorporated in the present specification by reference. All documents, patent applications, and technical standards mentioned in the present specification are incorporated herein by reference to the same extent as in a case in which each document, each patent application, and each technical standard are specifically and individually described by being incorporated by reference.

### Explanation of References

10: analysis apparatus
12: analysis chip
12A: body part
12Aa: bottom surface
12B: engagement rib
12C: support rib
12E: front end portion
13: stocker
14: transport mechanism
15: specimen dispensing processing unit
15a: nozzle
15b: dispensing mechanism
16: reagent dispensing processing unit
16a: nozzle
16b: dispensing mechanism
17: pressurization processing unit
18: reaction processing unit
19: detection processing unit
19a: optical head
20: chip disposal unit
21: processor
22: electrophoresis section
24: pressing unit
30: resin plate
32: microchannel
40: transport table
41: two-dot chain lines sandwiching contact region
42: transport surface
42A: contact region
43: hole
44: opening edge
44a: partial opening edge
45: recessed portion
46: recessed surface
47: outer edge
47a: partial outer edge
47b: semicircular portion
48: chipset opening
49: disposal opening
50: screw shaft
50A: shaft body
50B: helical protrusion
50Ba: protrusion portion
52: screw shaft
52A: shaft body
52B: helical protrusion
52Ba: protrusion portion
54: driving unit
55: motor
56: bearing unit
60: positioning mechanism
62: positioning pin
64: lifting mechanism
A: transport direction
B: tangent
C: contact point
P1 to P5: stop position
SP: pitch of helical protrusions 50B and 52B

## Claims

1. A transport mechanism that transports an analysis chip including a body part having a flat bottom surface and a pair of engagement ribs provided to protrude outward from both ends in a width direction of the body part in a transport direction orthogonal to the width direction, the transport mechanism comprising:
a transport table having a transport surface on which the analysis chip is placed with the bottom surface in contact with the transport surface, the analysis chip being transported while sliding on the transport surface; and
a pair of screw shafts disposed parallel to each other along the transport direction, each of which has a shaft body and a helical protrusion helically formed on an outer peripheral surface of the shaft body, and the pair of screw shafts propels the analysis chip in the transport direction by rotating about their respective axes while the helical protrusions are engaged with the engagement ribs,
wherein the transport surface has a hole formed in a contact region where the bottom surface of the analysis chip contacts the transport surface, and a recessed portion formed in at least a part of a periphery of an opening edge of the hole, and
the recessed portion has a recessed surface that makes a height of a partial opening edge, which is located on a downstream side in the transport direction on an entire circumference of the opening edge and includes a contact point with a tangent extending in a direction orthogonal to the transport direction, lower than a height of the transport surface, and the recessed surface extends from the partial opening edge to an outside of the contact region.

2. The transport mechanism according to claim 1,
wherein a ratio of a diameter of the hole to a length in the width direction of the body part is 8% or more, and the diameter is less than a length in the width direction of the body part.

3. The transport mechanism according to claim 1,
wherein a diameter of the hole is 4 mm or more.

4. The transport mechanism according to claim 1,
wherein the analysis chip has a planar shape in which a front end portion located on the downstream side in the transport direction has a front edge formed by a straight line extending in the direction orthogonal to the transport direction.

5. The transport mechanism according to claim 1,
wherein a partial outer edge located on the downstream side in the transport direction on an entire circumference of an outer edge of the recessed portion and extending to the outside of the contact region extends toward the outside of the contact region in an inclined manner toward the downstream side in the transport direction with respect to the tangent, and
the partial outer edge is a straight line or has an arc shape convex toward the outside of the contact region.

6. The transport mechanism according to claim 5,
wherein an overall planar shape of the recessed portion including the hole is an oval shape of which a minor diameter is a diameter of the hole and one side in a longitudinal direction is the partial outer edge, and
an entirety of a semicircular portion on an opposite side of the hole in the oval shape is located outside the contact region.

7. The transport mechanism according to claim 1,
wherein a plurality of the holes are provided, and the recessed portion is provided for each of the holes.

8. The transport mechanism according to claim 1,
wherein the analysis chip is a microchannel device including a microchannel for analyzing a specimen consisting of a biological sample.

9. An analysis apparatus comprising:
the transport mechanism according to any one of claims 1 to 8; and
a plurality of processing units disposed along the transport direction of the transport table and performing predetermined processing on a specimen accommodated in the analysis chip.
